(19) Europäisches Patentamt
European Patent Office
Office européen des brevets

(11) **EP 1 175 595 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(51) Int Cl.7: **G01C 21/36**, G08G 1/0969, G09B 29/10

(21) Anmeldenummer: 00943558.7

(22) Anmeldetag: **05.05.2000**

(86) Internationale Anmeldenummer:
**PCT/DE2000/001422**

(87) Internationale Veröffentlichungsnummer:
**WO 2000/066977 (09.11.2000 Gazette 2000/45)**

(54) **VERFAHREN ZUM GEWINNEN EINER DREIDIMENSIONALEN KARTENDARSTELLUNG UND NAVIGATIONSSYSTEM**

METHOD OF OBTAINING A THREE-DIMENSIONAL REPRESENTATION OF A MAP, AND NAVIGATION SYSTEM

PROCEDE POUR OBTENIR UNE REPRESENTATION TRIDIMENSIONNELLE D'UNE CARTE, ET SYSTEME DE NAVIGATION

(84) Benannte Vertragsstaaten:
**DE FR GB IT**

(30) Priorität: **05.05.1999 DE 19920709**

(43) Veröffentlichungstag der Anmeldung:
**30.01.2002 Patentblatt 2002/05**

(73) Patentinhaber: **SIEMENS AKTIENGESELLSCHAFT 80333 München (DE)**

(72) Erfinder: **RITTER, Dieter**
**D-93049 Regensburg (DE)**

(56) Entgegenhaltungen:
EP-A- 0 378 271        EP-A- 0 802 516
EP-A- 0 881 466        DE-A- 19 835 874
US-A- 5 742 924

**Beschreibung**

Die Erfindung betrifft ein Verfahren zum Gewinnen einer dreidimensionalen Darstellung für ein Navigationssystem aus zweidimensionalen Straßenkartendaten und ein Navigationssystem, das eine solche dreidimensionale Darstellung erzeugen kann.

Digitale Straßenkarten für Navigationssysteme bestehen aus zweidimensionalen Netzwerken aus Straßensegmenten. Insbesondere bei einer Kartendarstellung in einem großen Maßstab ist zu einer besseren Orientierung eine dreidimensionale Kartenausgabe wünschenswert.

Aus der Patentschrift US 5,757,290 ist ein Navigationssystem bekannt, das eine Straßenkarte in Vogelperspektive darstellt. Der dreidimensionale Effekt wird durch die Verwendung von entfernungsabhängigen Farbverläufen unterstützt.

Die Patentanmeldung EP 0 660 290 A1 betrifft eine dreidimensionale Darstellung aus einer Vogelperspektive, bei der unterschiedliche Maßstäbe für einen Nahbereich und einen Fernbereich benutzt werden.

Aus der Patentanmeldung EP 0 752 687 A2 ist eine dreidimensionale (3D-) Darstellung aus einer Vogelperspektive für Navigationssysteme bekannt, bei der die Transformation der digitalen Straßenkartendaten in die Vogelperspektive durch Umwandlungstabellen optimiert wird.

Die Darstellung einer Straßenkarte in Vogelperspektive erfolgt durch eine perspektivische Projektion, die von einem virtuellen, erhöhten Standpunkt aus erfolgt. Damit wird ein Pseudo-3D-Effekt erzeugt, der die Ebene in einen Fluchtpunkt zusammen laufen läßt. Es werden also keine wirklichen 3D-Informationen benutzt, sondern die Ebene ist immer noch flach.

Aus der Offenlegungsschrift DE 198 35 874 A1 ist eine Kartenanzeigevorrichtung bekannt, die ein richtungsunabhängiges Distanzgefühl auf einer Großraumkarte bei gleichzeitiger dynamischer Kompression der Kartenränder ermöglichen soll. Hierzu wird eine laterale Transformation in der Ebene vorgenommen. Eine Transformation in die dritte Dimension findet nicht statt.

Die Patentanmeldung EP 0 378 271 beschreibt ein Verfahren zur perspektivischen (dreidimensionalen) Darstellung von Kartendaten. Hierbei wird eine Parallel- oder Zentralprojektion der Koordinaten oder eine Kombination davon durchgeführt.

Es ist ein Ziel der Erfindung, ein Verfahren zum Gewinnen einer dreidimensionalen Darstellung für ein Navigationssystem und ein Navigationssystem bereit zu stellen, die eine verbesserte dreidimensionale Kartendarstellung ermöglichen.

Dieses Ziel wird mit einem Verfahren und einem Navigationssystem erreicht, wie sie in den unabhängigen Patentansprüchen definiert sind. Vorteilhafte Weiterbildungen der Erfindung sind in den abhängigen Ansprüchen angegeben.

Eine besonders natürlich wirkende, dreidimensionale Kartendarstellung wird erzeugt, indem eine durch zweidimensionale Straßenkartendaten aufgespannte Ebene mittels einer polynomialen Transformation in die dritte Dimension überführt wird. Die Transformation wird radialsymmetrisch um einen virtuellen Standpunkt erzeugt. Dadurch erfolgt eine dreidimensionale Verzerrung der ursprünglich nur zweidimensional vorhandenen Straßenkartendaten.

Die künstliche Krümmung oder Verzerrung der zweidimensionalen Straßenkartendaten, und insbesondere des Straßennetzes, wird durch eine nichtlineare Transformation und eine perspektivische Darstellung von einem beliebigen, virtuellen Standpunkt aus, vorzugsweise einer momentanen Fahrzeugposition, erzeugt.

Eine Sichtweite oder ein Horizont kann beispielsweise durch eine Kreislinie begrenzt werden. Dadurch müssen wesentlich weniger Straßenkartendaten in eine dreidimensionale Abbildung umgerechnet werden als bei einer rein perspektivischen Projektion. Durch das begrenzte Blickfeld resultiert eine übersichtliche Darstellung und ein angenehmer, dynamischer 3D-Eindruck.

In einer besonders bevorzugten Ausführungsform werden NURBS-Flächen (Non-Uniform Rational B-Spline) zur graphischen Anzeige verwendet. Diese Subflächen oder Teilflächen können für jede Form verwendet werden, insbesondere für die verformte dreidimensionale Ebene einschließlich der Polygone, die die Straßen und Straßenkreuzungen in der Kartendarstellung repräsentieren.

Vorteilhafterweise werden in eine Kartendarstellung dreidimensionale Objekte wie Fahrzeuge, Gebäude oder Gegenstände eingebunden. Diese Objekte können externe Objekte sein, die nicht auf demselben Medium wie die digitalen, zweidimensionalen Straßenkartendaten gespeichert sind. Üblicherweise handelt es sich bei den digitalen Straßenkarten lediglich um Geo-Informations-System-Datenbanken, in denen die Geokoordinaten von Straßensegmenten, Gewässer und der gleichen zweidimensional gespeichert sind.

Solche Objekte können beispielsweise als dreidimensionale geometrische Körper oder Strukturen gespeichert sein. Diese Körper lassen sich mit Texturen versehen, um einen natürlichen Eindruck zu erwecken. Außerdem können die Objekte, beispielsweise bei einem Passieren eines Objekts, gedreht werden.

Vorteilhafterweise wird das darzustellende Blickfeld und die Sichtweite synchron mit dem virtuellen Standpunkt bewegt.

Während bislang bei der Kartendarstellung von Navigationssystemen zur Flächenbeschreibung regelmäßig Dreiecke verwendet werden, ist es zweckmäßig für die Darstellung dreidimensionaler Flächen sogenannte NURBS-Flächen einzusetzen. Diese können mit nur sehr wenigen Parametern beschrieben werden. Anstatt eine dreidimensionale Fläche beispielsweise mit 500 * 500 Punkten in der x-y-und z-Ebene mittels Dreiecken anzugeben, reichen typischerweise einige wenige Parameter. Diese beschreiben interpoliert den Flächenrand (Bezier-Kurven) und näherungsweise die Flächenkrümmung der Ursprungsdaten. Mit Hilfe von NURBS-Flächen können also die erzeugten dreidimensionalen Straßenkartendaten oder Straßennetzdaten sehr effizient verarbeitet werden.

Vorzugsweise werden die Straßensegmente, die in den digitalen Straßenkartendaten regelmäßig nur als Linien gespeichert sind, mit Begrenzungslinien versehen. Dabei ergibt sich eine besonders realistische Straßenansicht, wenn die Begrenzungslinien in Bereichen aufeinandertreffender Straßensegmente zu einem gekrümmten Verlauf verzerrt werden. Eine unnatürliche, eckige Darstellung aufeinandertreffender Straßen wird somit vermieden. Vorzugsweise werden die Straßensegmente zunächst auf diese Weise behandelt und erst anschließend durch eine polynomiale Transformation in eine dreidimensionale Ansicht verzerrt.

Eine geeignete Maßnahme, um Ecken aufeinandertreffender Straßensegmente zu glätten, ist eine nichtlineare Interpolation. Vorzugsweise werden hierbei an Schnittpunkten zwischen Straßensegmenten oder Knoten diejenigen Punkte einer Begrenzungslinie, die näher am Schnittpunkt zweier Straßensegmente liegen, weiter von der durch die digitalen Straßenkartendaten bestimmten Position entfernt als weiter vom Schnittpunkt entfernt liegende Punkte. Bekannte Funktionen, mit denen dies bewerkstelligt werden kann, sind beispielsweise Bézier-Kurven und Polynom-Interpolationen.

In entsprechender Weise können Straßensegmente bearbeitet werden, die durch Gestaltungspunkte einen kurvenförmigen Straßenverlauf erhalten sollen. Die in den Gestaltungspunkten aufeinandertreffenden Straßensegmente oder deren Begrenzungslinien werden im Bereich um diese Gestaltungspunkte herum durch eine nichtlineare Interpolation verzerrt. Im Gegensatz zu Straßensegmenten, die in Kontenpunkten aufeinandertreffen, sollten die verzerrten Begrenzungslinien im wesentlichen auf den Gestaltungspunkten liegen. Das heißt, die Begrenzungslinien werden unmittelbar am Gestaltungspunkt nicht verzerrt. Die Verzerrung um die Gestaltungspunkte herum erfolgt vorzugsweise mit einer Spline-Interpolation.

Weitere Vorteile, Merkmale und Anwendungsmöglichkeiten der Erfindung ergeben sich aus der nachfolgenden Beschreibung von Ausführungsbeispielen in Verbindung mit den Zeichnungen. Es zeigen:

Figur 1    ein Navigationssystem,
Figur 2    einen virtuellen Standpunkt, der Ausgangspunkt für die Gewinnung einer dreidimensionalen Kartendarstellung ist,
Figur 3    ein sich für den Standpunkt von Figur 1 ergebendes Blickfeld,
Figur 4    verschiedene dreidimensionale Objekte, die in eine dreidimensionale Kartendarstellung eingebunden werden sollen,
Figur 5    linienförmige Straßensegmente einer zweidimensionalen Straßenkarten-Datenbank,
Figur 6    Straßensegmente und Schnittpunkte zwischen Straßensegmenten nach ihrer Umwandlung in Straßen mit Begrenzungslinien und Glättung der Straßenkonturen,
Figur 7    den Vorgang des Glättens der Straßenkonturen,
Figur 8    ein Objekt vor dem Ausstatten mit einer Textur,
Figur 9    das Objekt von Figur 8 mit Textur,
Figur 10   das in eine Straßenkarte eingebundene Objekt von Figur 9, und
Figur 11   ein Ablaufdiagramm für die Erzeugung einer 3-D-Bildausgabe,

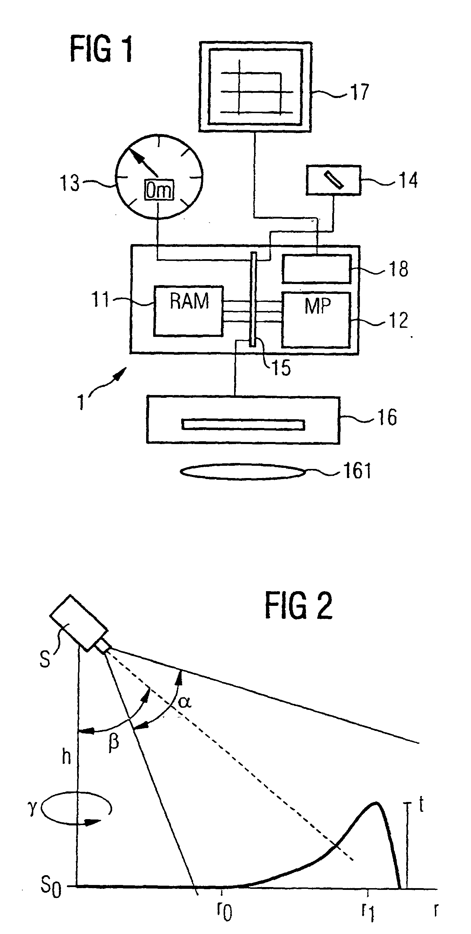

Figur 1 veranschaulicht ein Navigationssystem 1 mit einem Arbeitsspeicher 11 und einer als Mikroprozessor ausgebildeten Umwandlungseinheit 12. Ein Entfernungsmesser 13 und ein Richtungsmesser 14 dienen zur Positionsbestimmung über Koppelnavigation. Ein nicht dargestellter GPS-Sensor ist genauso wie der Entfernungsmesser 13, der Richtungsmesser 14 und ein Laufwerk 16 für ein Speichermedium 161 über einen Systembus 15 mit dem Mikroprozessor verbunden.

Beim Speichermedium 161 handelt es sich um eine DVD (digital versatile disc).

Eine Anzeigeeinrichtung 17 wird über eine Bildsteuereinheit 18 zur Ausgabe von Bildinformation und insbesondere zur Darstellung von Straßenkarten angesteuert. Die Bildsteuereinheit 18 steht wiederum über dem Systembus 15 mit dem Mikroprozessor in Verbindung.

Figur 2 veranschaulicht eine Fahrzeugposition oder einen Standpunkt $S_0$, bei dem es sich um eine vom Navigationssystem ermittelte momentane Fahrzeugposition handelt. Ausgehend von der gemessenen Fahrzeugposition wird dem Benutzer des Navigationssystems von einem virtuellen Standpunkt $S_0$ aus, der mit einer Höhe h über den Standpunkt $S_0$ projiziert ist, eine Kartendarstellung bis zu einem künstlichen Horizont einer Höhe t geboten.

Ein Blickwinkel oder ein Blickfeld $\alpha$ öffnet sich von dem virtuellen Standpunkt S aus und reicht bis zu dem künstlichen Horizont. Der Abstand $r_1$ bis zum Horizont, also die Sichtweite, wird durch die Wölbung oder Krümmung der Ebene und den Beginn der Wölbung $r_0$ bestimmt. Es werden nur diejenigen Punkte aus der Ebene verzerrt, die einen Abstand r vom Standpunkt $S_0$ haben, der zwischen $r_0$ und $r_1$ liegt.

Die Höhe h des Standpunkts S und die Neigung $\beta$ des Blickfelds $\alpha$ sind beliebig wählbar. In der Darstellung bezeichnet y die Blickrichtung. Diese bestimmt die Ausrichtung des Blickfelds $\alpha$.

Die für die Darstellung benötigten Straßenkartendaten werden durch den Horizont und der damit ver-

bundenen, zugehörigen maximalen Sichtweite $r_1$ stark eingegrenzt.

Eine Ebene mit Straßensegmenten, deren Mittelpunkt der Standpunkt $S_0$ ist, wird radialsymmetrisch um'den Standpunkt $S_0$ gekrümmt oder verzerrt. Es findet eine nichtlineare Interpolation der zweidimensionalen Ebene in die dritte Dimension statt. Zur Transformation dient eine Polynomfunktion.

Für einen beliebigen Punkt mit den kartesischen Koordinaten x, y der Ebene wird eine z-Koordinate ermittelt, mit

$$z = \Sigma_i \, a_i * r^i$$

$$r = [(x-x_p)^2 + (y-y_p)^2]^{1/2} \,,$$

wobei die kartesischen Koordinaten $x_p$ und $y_p$ die vom Navigationssystem ermittelte Fahrzeugposition $S_0$ wiedergeben. $a_i$ sind geeignete Koeffizienten mit $i \in [1...n]$.

Eine geeignete stückweise definierte Polynomtransformation mit dem Grad p=6 zum Erzielen einer dreidimensionalen Darstellung wird im folgenden wiedergegeben:

$$r > r_0: f(r) = -a(r- r_0)^p + c(r- r_0)^2,$$

$$a = \frac{-2t}{(r_1-r_0)^p(2-p)}$$

$$c = \frac{-pt}{(r_1-r_0)^2(2-p)}$$

$$r \leq r_0: f(r)=0$$

Die Farbe eines in die dritte Dimension transformierten Punktes bleibt unverändert, und die Textur, also die Darstellung der Straßen, bleibt erhalten.

Durch die polynomiale Transformation entsteht eine schüsselartig gewölbte oder gekrümmte Darstellung des Blickfelds $\alpha$ mit einer definierten, einstellbaren Sichtweite $r_1$. Diese Sichtweite r entspricht einem Horizont, der sich synchron zur Änderung des Standpunkts $S_0$ bewegt.

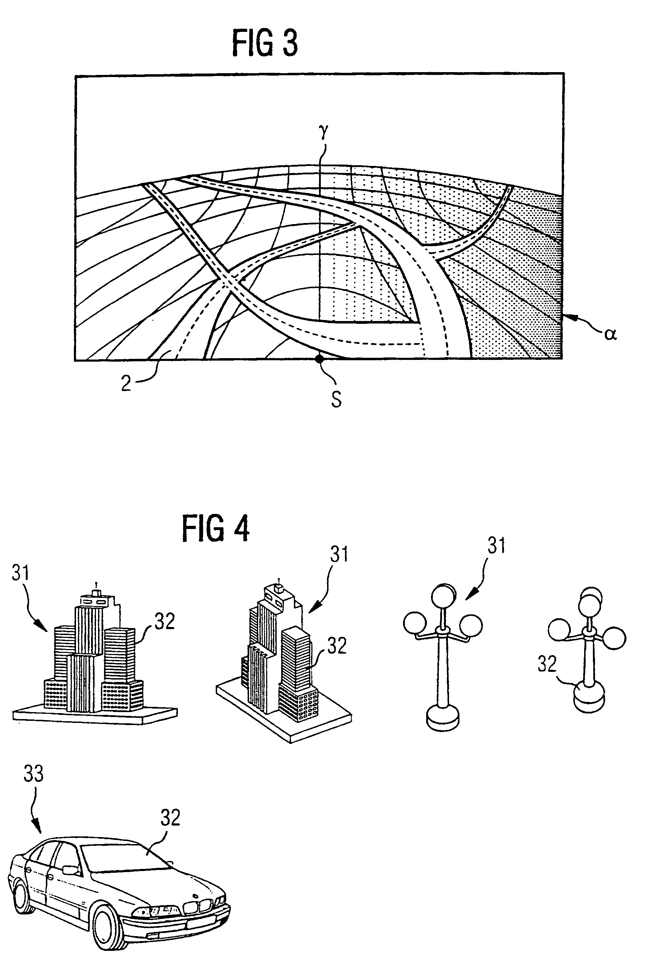

Figur 3 veranschaulicht ein Blickfeld $\alpha$. Dieses umfaßt ausgehend vom virtuellen Standpunkt S lediglich einen Teilausschnitt oder Sektor der Straßenkartendaten, die um den virtuellen Standpunkt S in einem Kreis mit dem Radius oder der Sichtweite $r_1$ liegen. Die Darstellung beschränkt sich auf ein in Fahrtrichtung liegendes Blickfeld, welches der natürlichen Betrachtungsweise eines Fahrzeugführers entspricht.

Um dem Betrachter des wiedergegebenen

Blickfelds $\alpha$ genauere Informationen über Entfernungen und Maßstab zur Verfügung zu stellen, ist das Blickfeld vom virtuellen Standpunkt aus bis zur Sichtweite $r_1$ oder dem Horizont mit einem Maschengitter versehen.

Die flächenförmig dargestellten Straßensegmente 2 sowie der dreidimensionale Hintergrund können dabei durch NURBS-Flächen dargestellt werden, die mit Texturen versehen sind.

Im linken Teil des Blickfeld $\alpha$ ist die Straßenkarte deutlich heller wiedergegeben, um die Richtung der Sonneneinstrahlung tageszeitabhängig wiederzugeben. Zudem ist der Bereich der stärksten Krümmung am hellsten wiedergegeben. Durch diese krümmungsabhängige Beleuchtung wird ein besonders realistische dreidimensionale Ansicht erzeugt.

Figur 4 veranschaulicht markante Objekte 31 und ein Fahrzeug 33, die separat von den zweidimensionalen Straßenkartendaten einer Geo-Informations-Datenbank gespeichert sind. Die Objekte 31 sind dazu bestimmt, in eine Kartendarstellung der in Figur 3 beschriebenen Art eingebunden zu werden.

Ein markantes Objekt 31 wird innerhalb der Kartendarstellung an den korrekten Geo-Daten eingebunden. Bei Annäherung des Navigationssystems beziehungsweise des Fahrzeugs, in dem sich das Navigationssystem befindet, wird das Objekt entsprechend der Annäherung vergrößert.

Bei Objekten, die in eine Kartendarstellung aufgenommen werden, handelt es sich beispielsweise um markante Gebäude, Türme, Häuser, Brücken, Säulen, Bögen, Burgen, Kirchen, Museen, Ampeln, Verkehrsschilder oder der gleichen. Die markanten Objekte sind in einem Arbeitsspeicher des Navigationssystems als dreidimensionale geometrische Figuren in Form von Vektorgrafiken gespeichert.

Um die Objekte besonders realistisch erscheinen zu lassen, sind diese mit einer Textur 32 versehen. Bei der Textur handelt es sich beispielsweise um ein gescanntes Bild des betreffenden Objekts. Die Textur 32 wird über das zugehörige dreidimensionale Objekt 31 gelegt. Dreidimensionale Detailinformationen, wie beispielsweise Fenster oder Balkone eines Gebäudes, sind bereits in der Textur enthalten, so daß der dreidimensionale geometrische Körper nur die Grundgeometrie oder Umrisse aufweisen muß.

Die Objekte 31 können gedreht werden, so daß sich bei einer Bewegung entlang des Objekts der Blickwinkel auf das Objekt in realistischer Weise ändert.

Das Fahrzeug 33 wird unmittelbar vor dem virtuellen Standpunkt in Fahrtrichtung in das Blickfeld abgebildet. Der abgebildete Fahrzeugtyp und seine Textur 32 ist im Navigationssystem frei wählbar. Daher kann das im Blickfeld abgebildete Fahrzeug 32 vom selben Typ sein wie das reale Fahrzeug, in dem das Navigationssystem eingebaut ist. Über die Textur 32 kann zusätzlich die korrekte Fahrzeugfarbe ausgewählt werden.

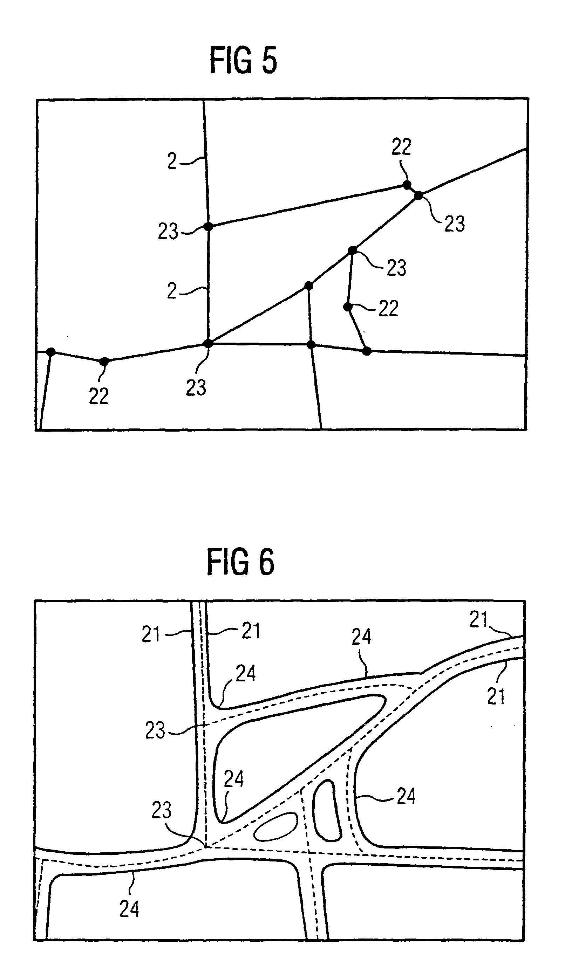

Figur 5 veranschaulicht einen Ausschnitt einer digitalen Straßenkarte, die aus zweidimensionalen Straßenkartendaten mit einem Netzwerk von Straßensegmenten 2 besteht. Mehrere aufeinandertreffende Straßensegmente weisen Knoten oder Schnittpunkte 23 auf. Kurven im Straßenverlauf sind durch Gestaltungspunkte (22) festgelegt.

Diese zweidimensionalen Straßenkartendaten sind auf einem käuflichen Datenträger gespeichert und Grundlage für die dreidimensionale Kartendarstellung.

Figur 6 zeigt denselben Abschnitt der digitalen Straßenkarte, nachdem die Straßensegmente 2 durch die Umwandlungseinheit mit Begrenzungslinien 21 versehen wurden. Die Begrenzungslinien 21 sind im Bereich aufeinandertreffender Straßensegmente 2 oder von Schnittpunkten 23 nichtlinear interpolliert oder verzerrt. Diese Verzerrung oder Krümmung des Straßenverlaufs kann beispielsweise durch eine Bézier-Kurve oder eine polynom Interpolation erzeugt werden.

Die linien- oder strichförmigen Straßensegmente 2, die in der digitalen Straßenkarte gespeichert sind, sind als Mittellinien der Fahrbahnen wiedergegeben.

Im Gegensatz zu Figur 5 stoßen die Begrenzungslinien an den Schnittpunkten 23 und an Gestaltungspunkten 22 nicht mehr geradlinig in einem bestimmten Winkel aufeinander, sondern weisen Krümmungen oder Kurven 24 auf. Die von Straßen eingerahmten Füllflächen sind in gleicher Weise behandelt, so daß der Straßenverlauf geglättet ist und Ecken abgerundet sind.

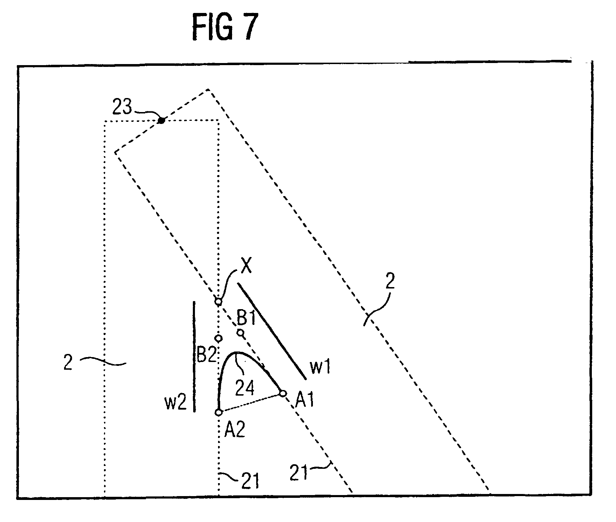

In Figur 7 wird die Glättung einer kantigen Straßenkontur mittels nichtlinearer Interpolation anhand eines anderen Ausschnitts aus der digitalen Straßenkarte veranschaulicht. Die auszugebenden Straßensegmente 2 wurden wiederum mit Begrenzungslinien 21 versehen. Dadurch erhalten aufeinandertreffende Straßensegmente 2 an den Schnittstellen X zwischen ihren Begrenzungslinien 21 eckige Konturen.

Um dies zu vermeiden erfolgt eine Glättung der Begrenzungslinien 21 mittels Bézier-Kurven in Bereichen aufeinandertreffender Straßensegmente 2. Die Darstellung der Bézier-Kurven erfolgte mit dem de-Casteljau-Algorithmus. Die Punkte $b^n(t)$ der Bézier-Kurve ergeben sich aus:

$$b_i^r(t) = (1-t)b_i^{r-1}(t) + tb_{i+1}^{r-1}(1),$$

wobei $\{r = 1,...,n; i = 0,...,n-r\}$ durch die Folge von Punkten $b_i (i = 0,...,n)$ als Bézier-Punkte des Bézier-Polygons gegeben sind. Die Punkte $b_i (i = 0,...,n)$ sind die durch die Geo-Koordinaten der Straßensegmente vorgegebenen Kontrollpunkte, die den zu interpolierenden Linienzug einer Begrenzungslinie an den Schnittstellen X definieren. Ein Punkt auf der Bezier-Kurve entspricht einem Parameterwert $t \in [0 ... 1]$.

Die dargestellten Punkte A1, A2, B1 und B2 sind die durch die Geo-Koordinaten vorgegebenen Kontrollpunkte $b_i$. Genauer sind A1 und A2 die Endpunkte der dargestellten Bézierkurve. B1 und B2 sind Bézier-Konstruktionspunkte. Ferner bedeuten die vorgebbaren Parameter w1 und w2 jeweils Distanzen zur Bestimmung der Lagen der Endpunkte A1 und A2, wobei jeweils von der zugehörigen Schnittstelle X ausgegangen wird.

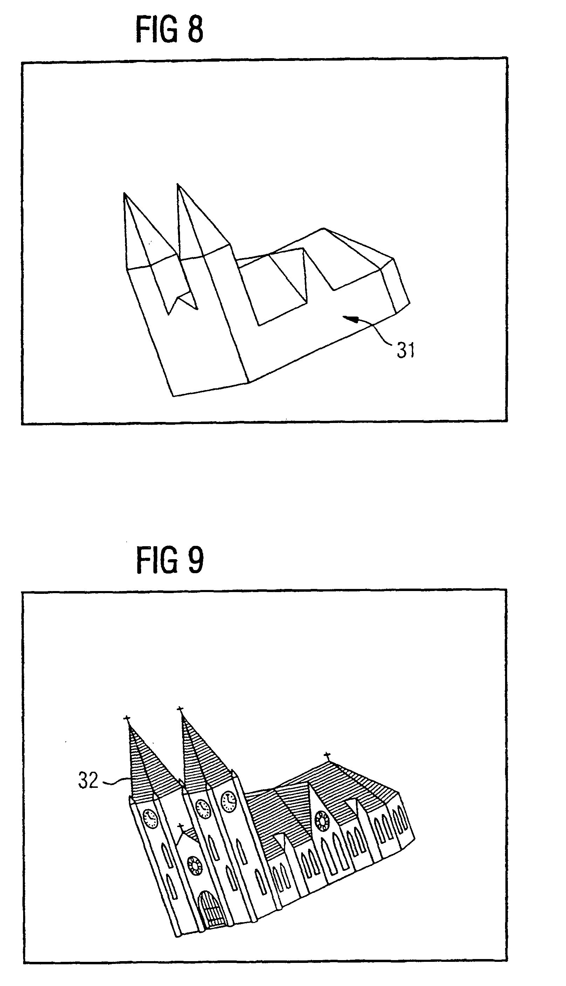

Figur 8 zeigt ein dreidimensionales geometrisches Objekt 31, bei dem es sich um eine Kirche handelt.

In Figur 9 ist das dreidimensionale Objekt 31 mit einer Textur 32 versehen, die durch Scannen einer Fotografie dieses Objekts gewonnen worden war. Die Textur enthält Detailinformationen des Objektes wie Türen, Fenster, Vorsprünge und dergleichen. Diese Detailinformationen liegen nur zweidimensional vor und werden nicht in eine dreidimensionale Struktur überführt. Durch versehen des dreidimensional aufbereiteten Objekts 31 mit der Textur ergibt sich bereits ein überzeugender dreidimensionaler Effekt.

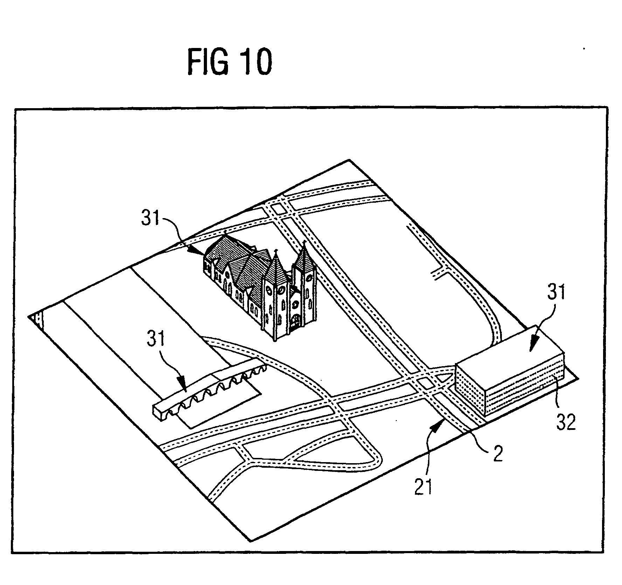

Figur 10 zeigt einen Abschnitt einer auszugebenden Straßenkarte nach der Einbindung von dreidimensionalen Objekten 31 und vor dem Transformieren der darzustellenden Ebene in eine dreidimensionale Ansicht.

Die Objekte 31 sind bereits mit den zugehörigen Texturen versehen. Die Straßensegmente 2 sind mit Begrenzungslinien 21 und mit geglätteten Kanten ausgestattet.

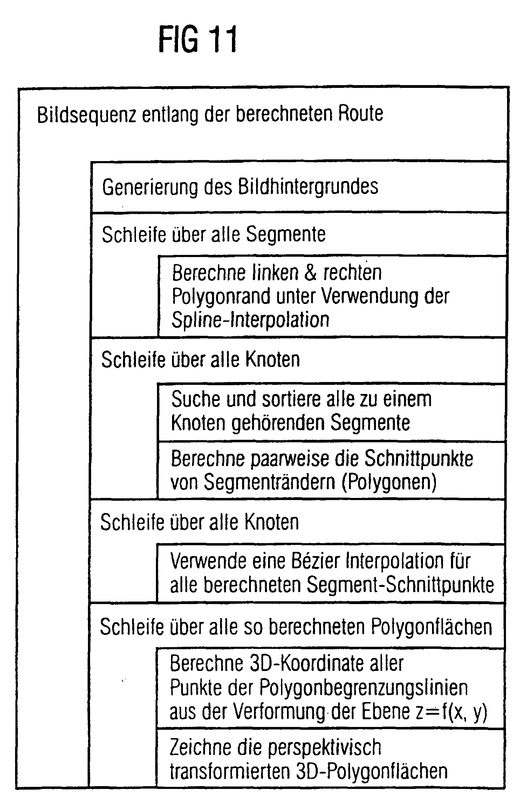

Aus Figur 11 wird der Ablauf der Umwandlung der Ausgangsdaten in eine 3D-Darstellung einer Straßenkartenansicht deutlich.

Für jede Darstellung einer Bildsequenz einer vom Navigationssystem berechneten Route werden die angegebenen Schritte ausgeführt, um eine gekrümmte dreidimensionale Fläche zu Erzeugen.

Zunächst wird für eine erste Darstellung der Bildhintergrund generiert.

Anschließend werden für alle darzustellenden Straßensegmente die rechte und die linke Straßenbegrenzungslinie (Polygonrand) unter Verwendung der Spline-Interpolation bestimmt. Die Spline-Interpolation beseitigt Kanten im Straßenverlauf.

Danach erfolgt eine Berechnung der Schnittpunkte (Knoten) der Straßensegmente. An den Schnittpunkten der aufeinandertreffenden Straßen werden die Straßenbegrenzungslinien mit einer Bezier-Interpolation verzerrt, um Straßenecken aufeinandertreffender Straßensegmente abzurunden oder zu glätten.

Danach wird die so gefundene Ebene, die aus einer Vielzahl von Polygonflächen besteht, die den Bildhintergrund und die Straßensegmente repräsentieren, in eine dreidimensionale Darstellung überführt. Alternativ zu den Polygonflächen können einige wenige NURBS verwendet werden. Die dreidimensionalen Koordinaten aller Punkte der Begrenzungslinien der Polygonflächen bzw. die NURBS werden durch die Verformung der Ebene mittels polynomialer Transformation ermittelt. Das erzielte Ergebnis wird mittels perspektivischer Projektion auf eine Anzeigeeinrichtung ausgegeben.

## Patentansprüche

1. Verfahren zum Gewinnen einer dreidimensionalen Kartendarstellung für ein Navigationssystem (1) aus digitalen, zweidimensionalen Straßenkartendaten mit einem Netzwerk aus Straßensegmenten (2), wobei die Straßenkartendaten für ein darzustellendes Blickfeld ($\alpha$) mit einer vorbestimmten Sichtweite ($r_1$) radialsymmetrisch um einen virtuellen Standpunkt (S) durch eine polynomiale Transformation in die dritte Dimension gekrümmt werden.

2. Verfahren nach Anspruch 1, **dadurch gekennzeichnet, daß** der virtuelle Standpunkt (S) fortlaufend durch das Navigationssystem (1) ermittelt wird, und daß das darzustellende Blickfeld ($\alpha$) synchron mit dem virtuellen Standpunkt (S) bewegt wird.

3. Verfahren nach einem der vorhergehenden Ansprüche, **dadurch gekennzeichnet, daß** Objekte (31) als dreidimensionale geometrische Körper im Blickfeld (a) plaziert werden.

4. Verfahren nach dem vorhergehenden Anspruch, **dadurch gekennzeichnet, daß** die Objekte (31) mit einer Textur (32) versehen werden.

5. Verfahren nach einem der vorhergehenden Ansprüche, **dadurch gekennzeichnet, daß** ein Fahrzeug (33) im Blickfeld (a) dargestellt wird.

6. Verfahren nach einem der vorhergehenden Ansprüche, **dadurch gekennzeichnet, daß** das Blickfeld (a) entsprechend der Tageszeit und/oder der Krümmung der dargestellten Abschnitte beleuchtet erscheint.

7. Verfahren nach einem der vorhergehenden Ansprüche, **dadurch gekennzeichnet, daß** ein Maschennetz (25) angezeigt wird.

8. Verfahren nach einem der vorhergehenden Ansprüche, **dadurch gekennzeichnet, daß** Straßensegmente (2) der digitalen Straßenkartendaten mit Begrenzungslinien (21) versehen werden, und daß die Begrenzungslinien (21) im Bereich aufeinandertreffender Straßensegmente (2) zu einem gekrümmten Verlauf verzerrt werden.

9. Navigationssystem mit einer Anzeigeeinrichtung (17), einer Positionsbestimmungseinheit (15) und einem Speichermedium (161), auf dem zweidimensionale digitale Straßenkartendaten mit einem Netzwerk von Straßensegmenten (2) gespeichert sind oder speicherbar sind, **gekennzeichnet durch** eine Umwandlungseinheit (18) zur Umwandlung von zweidimensionalen Straßenkartendaten eines darzustellenden Blickfelds ($\alpha$) mit einer vorbestimmten Sichtweite ($r_1$) in eine schüsselförmig gekrümmte Ansicht.

## Claims

1. Method for obtaining a three-dimensional map representation for a navigation system (1) from digital, two-dimensional road map data having a network of road segments (2), the road map data for a field of view ($\alpha$)that is to be represented and has a predetermined visual range ($r_1$) being curved into the third dimension in a radially symmetric fashion about a virtual viewpoint (S) by means of a polynomial transformation.

2. Method according to Claim 1, **characterized in that** the virtual viewpoint (S) is determined continuously by the navigation system (1), and **in that** the field of view ($\alpha$) to be represented is moved synchronously with the virtual viewpoint (S).

3. Method according to one of the preceding claims, **characterized in that** the objects (31) are placed in the field of view (a) as three-dimensional geometric bodies.

4. Method according to the preceding claim, **characterized in that** the objects (31) are provided with a texture (32).

5. Method according to one of the preceding claims, **characterized in that** the vehicle (33) is represented in the field of view (a).

6. Method according to one of the preceding claims, **characterized in that** the field of view (a) appears illuminated in accordance with the time of day and/or the curvature of the represented sections.

7. Method according to one of the preceding claims, **characterized in that** a meshed network (25) is displayed.

8. Method according to one of the preceding claims, **characterized in that** route segments (2) of the digital road map data are provided with boundary lines (21), and **in that** the boundary lines (21) are distorted into a curved course in the region of juxtaposed road segments (2).

**9.** Navigation system having a display device (17), a position-determining unit (15) and a storage medium (161), on which two-dimensional digital road map data are or can be stored with the aid of a network of road segments (2), **characterized by** a conversion unit (18) for converting two-dimensional road map data from a field of view ($\alpha$) that is to be represented and has a predetermined visual range ($r_1$) into a view curved in the shape of a dish.

**Revendications**

**1.** Procédé permettant d'obtenir, à partir de données numériques de cartes routières en deux dimensions avec un réseau de segments de routes (2), une représentation cartographique en trois dimensions pour un système de navigation (1 ), les données de cartes routières étant infléchies dans la troisième dimension, pour obtenir un champ de vision ($\alpha$) avec une profondeur de vision donnée ($r_1$), par symétrie radiale autour d'un point d'observation virtuel (S) à l'aide d'une transformation polynomiale.

**2.** Procédé selon la revendication 1 **caractérisé par le fait que** le point d'observation virtuel (S) est déterminé en continu par le système de navigation (1) et que le champ de vision ($\alpha$) à représenter est déplacé en synchronisation avec le point d'observation virtuel (S).

**3.** Procédé selon l'une des revendications précédentes **caractérisé par le fait que** des objets (31) sont placés dans le champ de vision ($\alpha$) en tant que corps géométriques en trois dimensions.

**4.** Procédé selon l'une des revendications précédentes **caractérisé par le fait que** les objets (31) sont dotés d'une texture (32).

**5.** Procédé selon l'une des revendications précédentes **caractérisé par le fait qu'**un véhicule (33) est représenté dans le champ de vision ($\alpha$).

**6.** Procédé selon l'une des revendications précédentes **caractérisé par le fait que** le champ de vision ($\alpha$) apparaît éclairé en fonction de l'heure et/ou de la courbure des sections représentées.

**7.** Procédé selon l'une des revendications précédentes **caractérisé par le fait qu'**un réseau maillé (25) est affiché.

**8.** Procédé selon l'une des revendications précédentes **caractérisé par le fait que** les segments de routes (2) des données numériques de cartes routières sont dotés de gabarits de délimitation (21) et que les gabarits de délimitation (21) sont déformés pour avoir une apparence infléchie dans la zone des segments de routes (2) qui se rencontrent.

**9.** Système de navigation comportant un dispositif d'affichage (17), une unité de détermination de la position (15) et un support de mémorisation (161), sur lequel sont mémorisées ou peuvent être mémorisées des données numériques de cartes routières en deux dimensions avec un réseau de segments de routes (2)
**caractérisé par**
une unité de conversion (18) permettant de convertir des données de cartes routières en deux dimensions d'un champ de vision ($\alpha$) à représenter avec une profondeur de vision donnée ($r_1$) en une vue infléchie en forme de cuvette.

## FIG 1

## FIG 2

# FIG 3

# FIG 4

FIG 5

FIG 6

# FIG 7

## FIG 8

31

## FIG 9

32

## FIG 10

# FIG 11

| Bildsequenz entlang der berechneten Route |
|---|

| Generierung des Bildhintergrundes |
|---|

| Schleife über alle Segmente |
|---|
| Berechne linken & rechten Polygonrand unter Verwendung der Spline-Interpolation |

| Schleife über alle Knoten |
|---|
| Suche und sortiere alle zu einem Knoten gehörenden Segmente |
| Berechne paarweise die Schnittpunkte von Segmenträndern (Polygonen) |

| Schleife über alle Knoten |
|---|
| Verwende eine Bézier Interpolation für alle berechneten Segment-Schnittpunkte |

| Schleife über alle so berechneten Polygonflächen |
|---|
| Berechne 3D-Koordinate aller Punkte der Polygonbegrenzungslinien aus der Verformung der Ebene z=f(x, y) |
| Zeichne die perspektivisch transformierten 3D-Polygonflächen |